# EUROPÄISCHE PATENTSCHRIFT

(11) **EP 2 011 318 B1**
(45) Veröffentlichungstag und Bekanntmachung des Hinweises auf die Patenterteilung: **31.08.2016**
(21) Anmeldenummer: 07711230.8
(22) Anmeldetag: 14.03.2007
(51) Int. Cl.: H04L 29/12

(54) **VERFAHREN UND VORRICHTUNG ZUR POLICY BASIERTEN MULTIPLEN ENUM DOMAIN AUFLÖSUNG MITTELS MODIFIZIERTEN DNS RESOLVERS**
METHOD AND DEVICE FOR THE POLICY-BASED MULTIPLE ENUM DOMAIN RESOLUTION BY MEANS OF MODIFIED DNS RESOLVERS
PROCÉDÉ ET DISPOSITIF DE RÉSOLUTION DE DOMAINES ENUM MULTIPLES À BASE DE RÈGLES AU MOYEN D'UN RÉSOLVEUR DNS MODIFIÉ

(30) Priorität: 17.03.2006 DE 102006012310
(43) Veröffentlichungstag der Anmeldung: 07.01.2009
(73) Patentinhaber: Deutsche Telekom AG, 53113 Bonn (DE)
(72) Erfinder: FLEISCHHAUER, Karsten, 64342 Seeheim-Jugenheim (DE); MILDNER, Frank, 64331 Weiterstadt (DE)
(74) Vertreter: 2K Patentanwälte Blasberg Kewitz & Reichel
(86) Internationale Anmeldenummer: PCT/DE2007/000451
(87) Internationale Veröffentlichungsnummer: WO 2007/107142

(56) Entgegenhaltungen:
- "ENUM for Network Routeing" ETSI STANDARDS, EUROPEAN TELECOMMUNICATIONS STANDARDS INSTITUTE, SOPHIA-ANTIPO, FR, Nr. V001, 2002, XP014029234 ISSN: 0000-0001
- WALTER, ROBERT H.: "[Enum] Querying Multiple ENUM Domains (e.g. e164.arpa, e.164.com, etc.)"[Online] 30. Januar 2001 (2001-01-30), Seiten 1-2, XP002439739 Gefunden im Internet: URL:http://www1.ietf.org/mail-archive/web/ enum/current/msg00773.html> [gefunden am 2007-06-28]
- FALTSTROM P: "E.164 number and DNS" NETWORK WORKING GROUP REQUEST FOR COMMENTS, September 2000 (2000-09), Seiten 1-10, XP002291742

## Beschreibung

Die Erfindung betrifft ein Verfahren und Vorrichtungen zur Bestimmung von Adressen in verschiedenen ENUM Bäumen durch einen modifizierten ENUM-Resolver.

### Hintergrund:

ENUM ist ein in [RFC 3761] standardisiertes Protokoll, das die Umsetzung von E.164 Rufnummern in Domain Namen des im Internet verwendeten Domain Name Systems [RFC 1035] ermöglicht.

Im Folgenden wird diese Umwandlung an Hand der Rufnummer "+493034971988" gemäß der [RFC 3761] beschrieben. Die Rufnummer setzt sich aus dem Verkehrsausscheidungszeichen "+", der internationalen Landeskennzahl für Deutschland "49", der Ortsnetzkennzahl "30" für Berlin und der Teilnehmernummer 34971988 zusammen. Im Folgenden die entsprechenden Schritte:
1. Entfernen aller nichtnumerischen Zeichen aus der Rufnummer. Aus "+493034971988" wird also "493034971988".
2. Einsetzen von Punkten zwischen den Ziffern.
   Dadurch entsteht der Zeichensatz "4.9.3.0.3.4.9.7.1.9.8.8".
3. Umkehr der Reihenfolge des Zeichensatzes.
   Dabei entsteht der Zeichensatz "8.8.9.1.7.9.4.3.0.3.9.4".
4. Anfügen des Zeichensatzes (Public ENUM Root) ".e164.arpa.". Als Resultat erhält man den Zeichensatz "8.8.9.1.7.9.4.3.0.3.9.4.e164.arpa.", der gleichzeitig schon die ENUM Domain für die Rufnummer "+493034971988" darstellt.

Auf Grund der öffentlichen Abfragemöglichkeit und der vom Besitzer der Rufnummer getriggerten Provisionierung wird das in [RFC 3761] spezifizierte ENUM auch als Public User ENUM bezeichnet. Durch Verwendung anderer ENUM Rootdomains, der Beschränkung der Abfragemöglichkeit der ENUM Domains und anderer Provisionierungsmodelle existieren hier auch alternative und untereinander konkurrierende Ansätze zur Implementierung von ENUM (z.B. Infrastruktur oder Privates ENUM).

Allerdings wird bei allen Verfahren weitestgehend die oben beschriebene Adresskonvertierung angewendet.

Innerhalb der ENUM Domain können durch Ressource Records u.a. im Internet verwendete Adressen (SIP URI) gespeichert und durch ENUM Clients über das DNS abgefragt werden.

ENUM wird auch von anderen Standardisierungsgremien zum Einsatz in konvergenten Netzen und auch im NGN selbst empfohlen. Dafür existieren z.B. die ETSI Spezifikation [ETSI TS 101 055] und 3GPP TS22.228 mit Empfehlungen zur Verwendung von ENUM.

Eine typische Anwendung von ENUM ist die Adressumsetzung beim VoIP Peering zwischen verschiedenen administrativen Domains.

Auf Grund der oben beschriebenen konkurrierenden ENUM Modelle entstehen bzw. existieren bereits mehrere parallele ENUM Implementierungen (z.B. "3gppnetwork.org.", "e164.info." , "e164.arpa."). Die Gründe hierfür sind verschiedene technische und vor allem auch wirtschaftspolitische Interessen der involvierten Parteien. Ergebnis ist die Existenz mehrerer ENUM Bäume mit unterschiedlichen ENUM Root Domains sowohl im öffentlichen, als auch im privaten DNS bzw. Internet.

Es ist nicht zu erwarten, dass hier eine Konsistenz zwischen den einzelnen Implementierungen hinsichtlich der als ENUM Domains gespeicherten Rufnummern und/oder der entsprechenden Ressource Records realisiert wird.

In herkömmlichen Verfahren kann der ENUM Client nur einen ENUM Baum abfragen, womit die Erreichbarkeit in anderen ENUM Bäumen eingetragener Adressen von potenziellen Peering-Partnern eingeschränkt ist.

Der ENUM Client müsste aufwendig in die Lage versetzt werden, mehrere ENUM Bäume seriell abzufragen. Dabei entstehen die folgenden Nachteile:
- Individueller Entwicklungsaufwand,
- in allen ENUM Clients müssen die Profile aller abgefragten ENUM Bäume verwendet werden,
- Latenzzeiten bei serieller Abfrage,
- erhöhte Prozessor-, Speicher und Netzlast im bzw. am ENUM Client,
- ggf. Sicherheitsprobleme mit verschiedenen privaten und öffentliches IP Netzanbindungen am ENUM Client,
- Aufbau eigener proprietären client- und dienstspezifischer Datenbanken, die mittels nicht ENUM basierter aufwendiger Datenaustauschverfahren Routinginformationen zur Verfügung stellen.

Mit dem Hintergrund der Anforderungen hinsichtlich Skalierbarkeit und Performance von für das Peering verwendeter Netzelemente sind besonders die diesbezüglichen Nachteile relevant.
EUROPEAN TELECOMMUNICATIONS·STANDARDS INSTITUTE: Technical Specification - ENUM for Network Routeing, ETSI TS 10X XXX VO.0.1, Jan. 2002;
WALTER, Robert, H.: [EMNUM] Querying Multiple ENUM Domains (e.g. e164.arpa, e.164.com, etc.), 2001, URL: http://www.ietf.org/mailarchivEi/ web/enum/currentlmsg00773.html [abgerufen am 23.11.2011];
FALTSTROM, P.: E.164 number and DNS, RFC 2916, September 2000 MOCKAPETRIS, P. V.: The Internet and Identifiers, Sigcomm; 2000, S. 1-50,
FALTSTROM, P., MEALLING, M.: The E.164 to Uniform Resource Identifiers (URI) Dynamic Delegation Discovery System (DDDS) Application(ENUM), RFC 3761, April 2004.

Offenbaren Internettechnologien insbesondere im Bereich der ENUM-Domains und deren Abfrage.

### Überblick über die Erfindung:

Aufgabe der Erfindung ist es, ein System und ein Verfahren zu entwickeln bzw. zu beschreiben, welches dem ENUM Client erlaubt, das Ergebnis der Abfrage mehrerer ENUM Bäume mittels einer Anfrage an dieses System zu erzielen.

Diese Aufgabe wird durch ein Verfahren nach Anspruch 1, sowie durch hierzu korrespondierende Vorrichtung und Datenträger nach Ansprüche 9 und 10 gelöst.

Im Allgemeinen ist einem ENUM Client nicht bekannt, in welchen der ENUM Bäume die umzusetzende Rufnummer als ENUM Domain existiert. Aus diesem Grund müssen mehrere ENUM Bäume abgefragt werden. Eine serielle Abfrage dieser ENUM Bäume führt zu hohen Latenzen bei der Namensauflösung selbst und damit auch z.B. beim Rufaufbau für das VoIP Peering. Weiterhin erhöht sich die Belastung des ENUM Clients hinsichtlich zu erzeugender bzw. zu verarbeitender DNS Abfragen bzw. Antworten.

Die Erfindung hingegen ermöglicht die Abfrage mehrerer ENUM Trees bzw. Bäume durch eine Anfrage eines ENUM Clients an einen modifizierten Resolver des erfindungsgemäßen Systems.

Grundlage der Idee ist die Schaffung einer Plattform, die stellvertretend für den ENUM Client die Abfrage mehrerer ENUM Bäume auf Basis einer Anfrage des ENUM Clients durchführt und dem anfragenden ENUM Client ein zusammengefasstes Ergebnis liefert.

Gegenüber den verschiedenen ENUM Bäumen agiert die vorliegende Erfindung als ENUM Client oder ENUM Resolver. Der Inhalt der abgefragten Domains (Ressource Records) kann gemäß den DNS CachAuthentication Mechanismen für bestimmte Zeit gespeichert werden und steht während dieser Zeit bei der erneuten Abfrage zur Verfügung.

Der Mechanismus zur Bildung der ENUM Domains der verschiedenen ENUM Bäume ist auf dem erfindungsgemäßen System konfigurierbar. Weiterhin können auf dem erfindungsgemäßen System den jeweils potenziell anfragenden ENUM Clients, beliebige von diesem System stellvertretend abzufragende ENUM Bäume zugeordnet werden.

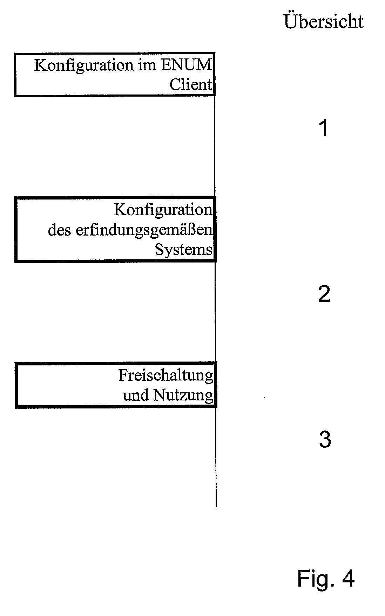

Die für einen ENUM Client abzufragenden ENUM Bäume können auf dem erfindungsgemäßen System konfiguriert werden. (Fig. 4) Basieren auf dieser Konfiguration wird in dem erfindungsgemäßen System die ursprüngliche ENUM Root Domain des anfragenden Clients durch die ENUM Root Domain(s) der abzufragenden ENUM Bäume ersetzt. Diese Ersetzung kann nach unterschiedlichen Kriterien erfolgen.

Im Folgenden einige Grundprinzipien der Erfindung.

Der ENUM Client stellt nur eine DNS/ENUM Anfrage an die erfindungsgemäße Vorrichtung. Der Datenaustausch von und zu dem erfindungsgemäßen System basiert auf standardisierten DNS Protokollformaten. Die erfindungsgemäße Vorrichtung setzt basierend auf der hinterlegten Policy und der vom ENUM Client empfangenen Anfrage (ENUM Domain und Absenderadresse) die zeitlich parallele Abfrage mehrerer ENUM Bäume um. Die innerhalb einer konfigurierbaren Zeit erhaltenen Antworten der ENUM Abfragen werden gemäß einer Policy zusammengefasst und an den Client als Antwort gesendet. Der ENUM Client erhält auf seine DNS/ENUM Anfrage nur eine Antwort von dem erfindungsgemäßen System. Auf dem erfindungsgemäßen System können verschiedene anfragende ENUM Clients per Policy verschiedenen ENUM Bäume zugeordnet werden (Multimandanten fähig).

Die erfindungsgemäße Vorrichtung ist vom ENUM Client über standardisierte DNS Protokolle erreichbar.

Die erfindungsgemäße Vorrichtung ist hinsichtlich der aufragenden Clients, der abzufragenden DNS und ENUM Bäume voll konfigurierbar.

Die erfindungsgemäße Vorrichtung ist in der Lage, über standardisierte Protokolle die Nameserver der verschiedenen ENUM Bäume abzufragen und die Antworten zu verarbeiten.

Der modifizierte Resolver wird anstelle des bestehenden Standard Resolver installiert.

Die Nameserver der abzufragenden ENUM Bäume sind in der Lage, innerhalb eines zu definierenden Zeitintervalls eine Antwort zu liefern.

Durch die Erfindung können bestehende ENUM Clients und das bestehende DNS bzw. ENUM Implementierungen unverändert weiter benutzt werden. Die für das Peering notwendigen Routing Informationen aus mehreren ENUM Bäumen stehen dem ENUM Client durch eine Anfrage bzw. Antwort zur Verfügung.

Der Nutzer der Erfindung kann mittels einer ENUM Abfrage seines ENUM Clients die abgefragten RR Typen von mehreren Antworten von mehreren ENUM Domains mehrerer ENUM Bäume erhalten.

Gegenüber den bekannten Verfahren der einzelnen ENUM Baum Abfrage des ENUM Clients bietet die Erfindung die Vorteile der verbesserten Erreichbarkeit, und der Multimandantenfähigkeit. Gegenüber den Verfahren der Multiplen ENUM Baum Abfrage mit modifizierten ENUM Clients birgt die Erfindung die Vorteile, dass keine Eingriffe in Software der ENUM Anwendung vorgenommen werden müssen, dass keine Modifikation des Betriebssystems des Clients notwendig ist, dass eine einfache Konfiguration der abzufragenden ENUM Bäume an nur einem Netzelement erfolgt.

Im NGN soll die erfindungsgemäße Vorrichtung die Naming Address Resolution Function (NARF) unterstützen, um z.B. das Interworking zwischen Fixed NGNs, Internet und Mobilfunknetzen zu ermöglichen.

Es ist davon auszugehen, dass zunächst dessen Routing und Roaming Informationen in unterschiedlichen ENUM Bäumen implementiert werden.

Somit ermöglicht der modifizierte Resolver zur multiplen ENUM Domain Auflösung dem Nutzer (Netzbetreiber), seine bestehende Infrastruktur (IP Plattform) beizubehalten. Er ist lediglich eine Ergänzung der bestehenden Infrastruktur der IP Plattform des Netzbetreibers. Die Konfiguration der abzufragenden ENUM Bäume erfolgt ENUM Client spezifisch im modifizierten Resolver. Der modifizierte Resolver kann dadurch von mehreren ENUM Clients der IP Plattform benutzt werden.

Die Abfrage mehrerer ENUM Bäume ermöglicht ein von der ENUM Implementierung potenzieller Peeringpartner unabhängigen Adressdatenaustausch. Damit erweitern sich die Möglichkeiten des Peering.

Investitionen und Zeitaufwand für eine damit begründete und ggf. nur mittelfristig gültige Zusammenlegung von ENUM Bäumen können eingespart werden.

Durch die parallele Abfrage mehrerer ENUM Bäume können die Latenzzeiten beim Rufaufbau erheblich reduziert werden. Die Usability für den Endnutzer wird verbessert.

Die Verlagerung der parallelen ENUM Abfrage auf die erfindungsgemäße Vorrichtung entlastet den ENUM Client (z.B. SIP Proxy) hinsichtlich der Prozessorlast, Speichernutzung und Netzwerkverkehr. Durch die Modularisierung der Funktionen erhöht sich die Skalierbarkeit des Gesamtsystems. Ferner bleibt das bestehende Verfahren der ENUM Anfrage an das DNS nach [RFC 1035] bzw. [RFC 3761] prinzipiell bestehen.

Hierdurch bedient die Erfindung die Interessen der Entwickler und Anwender von Telekommunikationssystemen. Entwickler können durch die Implementierung des Verfahrens mit ihren Systemen einen Mehrwert bieten. Durch die Telekommunikationsanbieter als Nutzer dieses Systems bzw. Verfahrens ergeben sich die bereits beschriebenen Vorteile.

Die wesentlichen Vorteile liegen darin, dass die erfindungsgemäße Vorrichtung vom ENUM Client über standardisierte DNS Protokolle erreichbar ist.

Die erfindungsgemäße Vorrichtung ist hinsichtlich der anfragenden Clients, der abzufragenden DNS und ENUM Bäume voll konfigurierbar.

Da die erfindungsgemäße Vorrichtung in der Lage ist, über standardisierte Protokolle Nameserver der verschiedenen ENUM Bäume abzufragen und deren Antworten zu verarbeiten, ist die Konfiguration der abzufragenden ENUM Bäume nur an einer Stelle notwendig. Dies führt zu einer Senkung des Entwicklungsaufwandes für die Clientanpassungen.

### Beschreibung der Figuren:

Im Folgenden werden die Figuren beschrieben, um ein besseres Verständnis der bevorzugten Ausführungsformen und der Erfindung zu erreichen.
- Figur 1: zeigt die Architektur des Modifizierten ENUM Resolvers (erfindungsgemäßen System), auf den drei Clients zugreifen, deren Anfrage über unterschiedliche ENUM Bäume aufgelöst werden;
- Figur 2: zeigt einen Ablauf des Verfahrens, wie es bisher bekannt ist;
- Figur 3: zeigt einen weiteren alternativen Ablauf des Verfahrens mit dem erfindungsgemäßen System;
- Figur 4: zeigt eine schematische Konfiguration der einzelnen Komponenten des erfindungsgemäßen Systems.

### Beschreibung der bevorzugten Ausführungsformen:

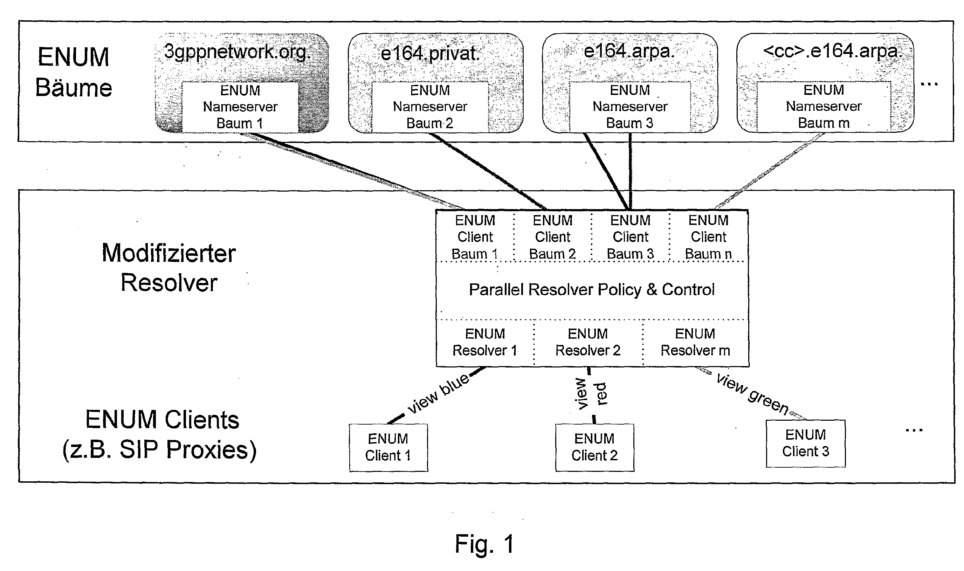

Aus der Fig 1 ist ersichtlich, dass mehrere ENUM Bäume existieren, und am erfindungsgemäßen System sind mehrere ENUM Clients angeschlossen, die jeweils einen oder mehrere unterschiedliche dieser ENUM Bäume abfragen.

Diese ENUM clientspezifische Abfragepolicy ist am erfindungsgemäßen System hinterlegt. ENUM Client 1 (view-blue) möchte z. B. Informationen aus dem ENUM Baum 1 und 3 abfragen. Der ENUM Client 2 möchte Informationen aus den ENUM Bäumen 2 und 3 abfragen. ENUM Client 3 möchte Informationen aus den ENUM Bäumen 1 und 4 abfragen.

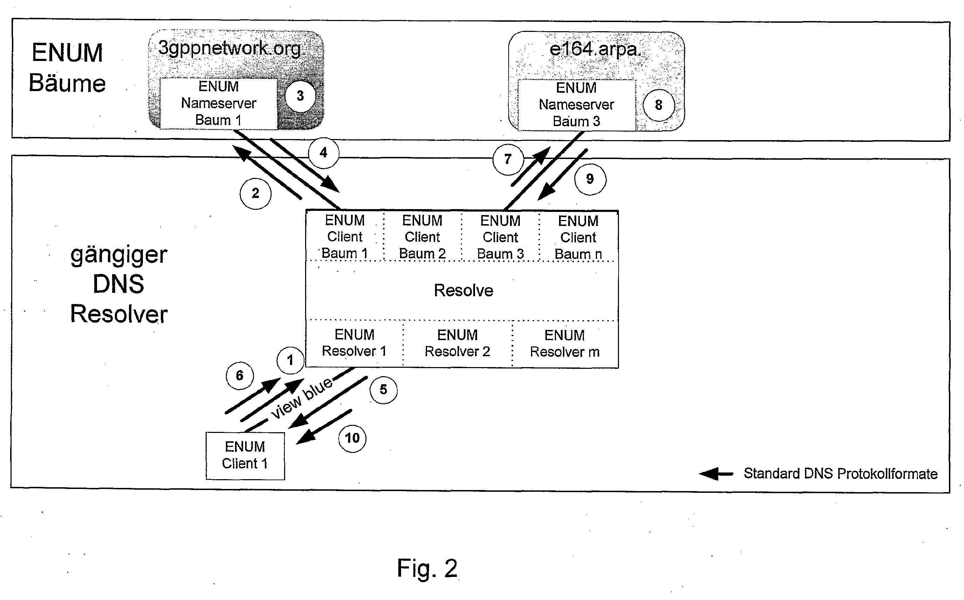

Bei der Figur 2 sendet der ENUM Client 1 in Schritt 1 eine Anfrage nach NAPTR RR der Domain "1.2.3.4.3gpnetwork.ort" an einen gängigen DNS Resolver.

In Schritt 2 sendet der gängige DNS Resolver eine Anfrage nach NAPTR RR der Domain "1.2.3.4.3gpnetwork.org" an den ENUM Nameserver des entsprechenden ENUM Baumes.

In Schritt 3 wird innerhalb der DNS Strukturen in der Zone "3gppnetwork.org." die NAPTR RR der Domain "1.2.3.4.3gppnetwork.org." aufgelöst.

In Schritt 4 wird die Antwort für die Abfrage 3 gesendet und vom gängigen DNS Resolver empfangen.

In Schritt 5 leitet der gängige DNS Resolver die empfange Antwort an den ENUM Client 1 weiter.

In Schritt 6 schickt der ENUM Client 1 die Anfrage nach NAPTR RR der Domain 1.2.3.4e164.arpa". an den gängigen DNS Resolver.

In Schritt 7 wird eine Anfrage nach NAPTR RR der Domain "1.2.3.4.e164.arpa." an den ENUM Nameserver des entsprechenden ENUM Baumes gesendet.

In Schritt 8 wird innerhalb der DNS-Strukturen in der Zone "e164.arpa" die NAPTR RR der Domain "1.2.3.4.e164.arpa" abgefragt.

In Schritt 9 wird die Antwort für Anfrage 7 vom ENUM Nameserver des entsprechenden ENUM Baumes empfangen.

In Schritt 10 leitet der gängige DNS Resolver die empfangene Antwort an den ENUM Client 1 weiter.

Somit ist bei Stand der Technik durch den ENUM Client 1 nur die serielle (nacheinander) Abfrage der ENUM Bäume 1 und 3 möglich.

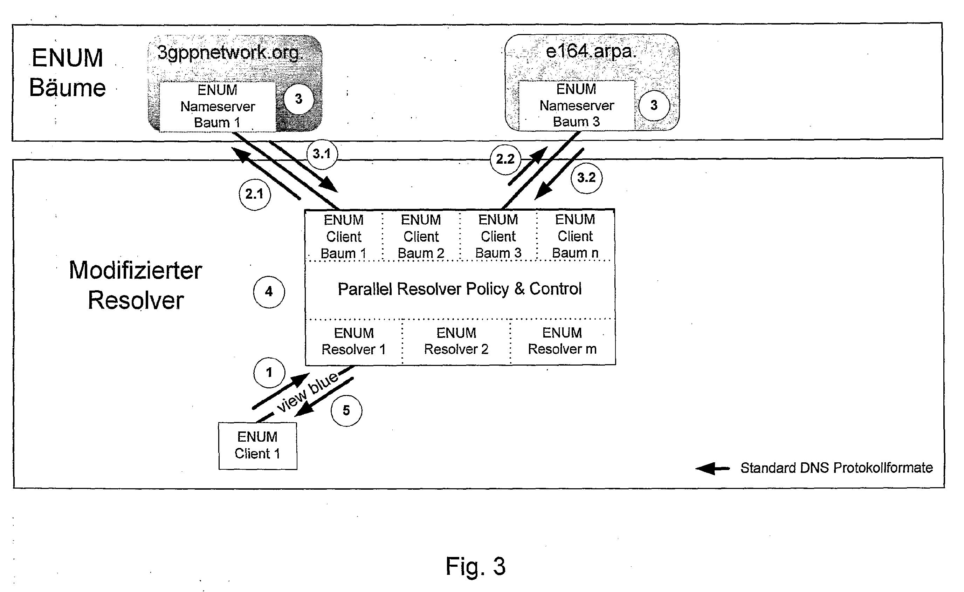

Die Figur 3 hingegen zeigt die parallele Abfrage.

In Schritt 1 schickt der ENUM Client 1 die Anfrage nach NAPTR RR der Domain "1.2.3.4.blue.view" an den modifizierten parallelen Resolver.

In Schritt 2 erkennt der ACNS, dass die Anfrage vom ENUM Client 1 gesendet wurde und ordnet diesen seiner Abfragereglung "view-blue" zu.

In Schritt 2.1 wird gleichzeitig mit 2.2 eine Anfrage nach NAPTR RR der Domain "1.2.3.4.3gppnetwork.org" an den entsprechenden Nameserver gesendet.

Gleichzeitig mit Schritt 2.1 wird in Schritt 2.2 eine Anfrage nach NAPTR RR der Domain "1.2.3.4e164.arpa" an den entsprechenden Nameserver gesendet.

In Schritt 3 erfolgt innerhalb der DNS Strukturen unterhalb der Zone "3gppnetwork.org" bzw. "e164.arpa" die Abfrage nach NAPTR RR der abgefragten Domain "1.2.3.4.3gppnetwork.org" bzw. "1.2.3.4.e164arpa".

In Schritt 3.1 wird die Antwort für die Abfrage 2.1. gesendet und vom modifizierten Resolver empfangen. In Schritt 3.2 wird die Antwort für die Abfrage 2.2 gesendet.

In Schritt 5 erwartet der modifizierte Resolver innerhalb eines bestimmbaren Zeitintervalls die DNS-Antworten für die abgefragten Domains und fasst diese zusammen.

In Schritt 5 sendet der modifizierte Resolver die zusammengefasste Antwort (z.B NAPTR RR, NXDOMAIN) an den ENUM Client 1.

Stellvertretend für den ENUM Client 1 werden die ENUM Bäume 1 und 3 parallel abgefragt. Ausgelöst wird diese Namensauflösung durch eine Anfrage an das erfindungsgemäße System. Der ENUM Client 1 erhält eine zusammengefasste Antwort der Abfrageergebnisse aus den ENUM Bäumen 1 und 3.

In der Figur 4 wird die Konfiguration beschrieben. Zuerst wird der modifizierte Resolver als Dienst für den Client eingetragen. Der modifizierte Resolver erhält die Einträge für die abzufragenden ENUM-Bäume und die entsprechenden Domains, sowie die Regeln zum Zugriff auf diese. Danach erfolgt der Betrieb des modifizierten Resolvers gemäß der Figur 3.

### Definitionen:

### DNS:

Das Domain Name System (DNS) ist einer der wichtigsten Dienste im Internet. Das DNS ist eine verteilte, hierarchische Datenbank, die den Namensraum im Internet verwaltet.

Hauptsächlich wird das DNS zur Umsetzung von Domainnamen in IP-Adressen (forward lookup) benutzt. Dies ist vergleichbar mit einem Telefonbuch, das die Namen der Teilnehmer in ihre Telefonnummer auflöst. Das DNS bietet somit eine Vereinfachung, weil Menschen sich Namen weitaus besser merken können als Zahlenkolonnen. So kann man sich den Domainnamen www.wikimedia.org sehr einfach merken, die dazugehörende IP-V4-Adresse 145.97.39.155 dagegen nicht ganz so einfach.

Mit dem DNS ist auch eine umgekehrte Auflösung von IP-Adressen in Namen (reverse lookup) möglich. In Analogie zum Telefonbuch entspricht dies einer Suche nach dem Namen eines Teilnehmers zu einer bekannten Rufnummer (dies ist innerhalb der Telekommunikationsbranche unter dem Namen Inverssuche bekannt).

Darüber hinaus ermöglicht das DNS eine Entkopplung vom Namensraum und Netzwerkadressierung. Z.B. muss bei der Änderung der IP-Adresse eines Netzwerkelementes nicht der Domainname geändert werden. Weiterhin ermöglicht das DNS eine rudimentäre Lastverteilung (Load Sharing).

Das DNS wurde 1983 von Paul Mockapetris entworfen und im RFC 882 beschrieben. Der RFC 882 wurde inzwischen von den RFC 1034 und 1035 abgelöst und durch zahlreiche RFC ergänzt.

### ENUM:

ENUM steht entweder für "Electronic Numbering" oder "tElephone NUmber Mapping" und ist eine Anwendung des Domain Name Systems zur Übersetzung von Telefonnummern in Internet-Adressen. ENUM wird im RFC 3761 definiert. Der Bedarf für eine solche Lösung erwuchs aus der Verfügbarkeit von VoIP-Diensten und dem Bedarf des Anwenders, sowohl im Internet als auch im klassischen Telefonnetz unter derselben Rufnummer bzw. einer Rufnummer überhaupt erreichbar zu sein.

### Resolver:

Resolver sind Ansammlungen von Bibliotheken, die Informationen aus dem DNS abrufen können. Sie bilden die Schnittstelle zwischen Anwendung und Nameserver. Der Resolver übernimmt die Anfrage, die von einer Anwendung bzw. einem Host übermittelt wurde, und löst die abzufragende Adresse (Domain und Resource Record) auf und leitet das Ergebnis der Abfrage an die Anwendung bzw. Host weiter.

### ENUM Client:

Ein Client (englisch für "Klient, Mandant"), nicht zu verwechseln mit Klient, ist eine Anwendung, die in einem Netzwerk den Dienst eines Servers (von englisch to serve "bedienen") in Anspruch nimmt. Man spricht dann vom Client-Server-Prinzip.

Ein ENUM Client ist ein Dienst eines Servers zur Abfrage des DNS mit ENUM Anfragen und zum Empfangen von DNS Antworten. Der ENUM Client erhält die Abfrageparameter von der Applikation und übergibt die Antwortparameter auch dieser Applikation.

### SIP Proxy:

Das Session Initiation Protocol (SIP) ist ein Netzprotokoll zum Aufbau einer Kommunikationssitzung zwischen zwei und mehr Teilnehmern. Das Protokoll wird im RFC 3261 (früher RFC 2543) spezifiziert. In der IP-Telefonie ist das SIP ein häufig angewandtes Protokoll.

### Proxy:

Ein Proxy oder Proxyserver (von engl. proxy representative = Stellvertreter, bzw. lat. "proximus" = "Der Nä (c) hste") ist ein Dienstprogramm für Computernetze, das im Datenverkehr vermittelt. Es macht den Datentransfer effizienter (weniger Netzbelastung durch große Datenmengen) bzw. schneller, kann aber auch die Sicherheit erhöhen.

### NGN (Next Generation Network):

NGN ist der Überbegriff für eine Netzwerkstruktur, mit der Provider zukünftige Netzwerke definieren. NGN besteht naturgemäß aus mehreren Komponenten, die in einem Zusammenspiel die jeweilige Funktionalität und Leistungsfähigkeit des Netzes ausmachen.

### Bezugszeichenliste

1: Im ENUM Client wird das erfindungsgemäße System als ENUM Resolver eingerichtet: die Absender IP Adresse und die virtuelle ENUM Root Domain der Peering Instanz des ENUM Client wird konfiguriert.
2: Einrichtung der abzufragenden ENUM Bäume und der Bildungsregeln für die dort verwendeten ENUM Domains. Einrichtung des ENUM Clients und Zuweisung der für diesen stellvertretend abzufragenden ENUM Bäume (Policy).
3: ENUM Client fragt modifizierten Resolver mit einer ENUM Domain (z.B. 1.2.3.4.foo.) an Stellvertretende Abfrage der entsprechenden ENUM Bäume durch das System. Innerhalb eines konfigurierbaren Zeitintervalls Empfang und Auswertung der Antwort(en) Antwort an Client (NAPTR RR)

## Patentansprüche

1. Verfahren zur Bestimmung von Adressen in verschiedenen ENUM Bäumen durch einen modifizierten ENUM-Resolver, der einerseits eine Vielzahl von Schnittstellen zu ENUM-Clients aufweist und andererseits eine Vielzahl von Schnittstellen zu unterschiedlichen ENUM-Resolvern aufweist, umfassend die Schritte:
- Empfangen einer ENUM-Anfrage von einem ENUM-Client;
- Abwandeln der Anfrage, so dass die Anfrage parallel an die Vielzahl von unterschiedlichen ENUM-Resolvern sendbar ist, indem die ursprüngliche ENUM-Domain durch jeweils unterschiedliche ENUM Root Domains ersetzt wird;
- Paralleles Senden der ENUM-Abfragen an die Vielzahl von unterschiedlichen ENUM-Resolvern,
- Verarbeiten der Ergebnisse der parallelen ENUM-Anfragen
- Weiterleiten eines Ergebnisses der parallelen ENUM-Anfragen an den ENUM-Client,
**gekennzeichnet durch**,
einen modifizierten ENUM-Resolver, der eine Reihe von lokalen ENUM-Resolver bereitstellt, die eine Schnittstelle zu den ENUM-Clients herstellen, und der eine Vielzahl von lokalen ENUM-Clients aufweist, die wiederum parallel die ENUM-Resolver der ENUM-Bäume ansprechen, wobei ein paralleles Auflösungskonzept und eine entsprechende Kontrolle zwischen den lokalen ENUM-Resolvern und den lokalen ENUM-Clients die Kommunikation zwischen beiden steuert, wobei die innerhalb einer konfigurierbaren Zeit erhaltenen Antworten der ENUM Abfragen gemäß einer Policy zusammengefasst und an den Client als Antwort gesendet werden, wobei die Abfrageergebnisse aller ENUM Anfragen übergeben werden und, falls Teilmengen dieser Ergebnisse identisch sind, diese Elemente nur einmal Übergeben werden.

2. Das Verfahren nach einem oder mehreren der vorhergehenden Ansprüche, wobei die ENUM-Abfragen und ihre Ergebnisse für eine bestimmte Zeit gespeichert bzw. gecacht werden.

3. Das Verfahren nach einem oder mehreren der vorhergehenden Ansprüche, wobei auf dem erfindungsgemäßen System dem jeweils potenziell anfragenden ENUM Client beliebige von diesem System stellvertretend abzufragende ENUM Bäume zugeordnet werden.

4. Das Verfahren nach einem oder mehreren der vorhergehenden Ansprüche, wobei das erfindungsgemäße System die Naming Address Resolution Function NARF unterstützt um vorzugsweise das Interworking zwischen Fixed NGNs, Internet und Mobilfunknetzen oder innerhalb dieser zu ermöglichen.

5. Das Verfahren nach einem oder mehreren der vorhergehenden Ansprüche, wobei die Konfiguration der abzufragenden ENUM Bäume ENUM Client spezifisch im modifizierten ENUM - Resolver erfolgt.

6. Das Verfahren nach einem oder mehreren der vorhergehenden Ansprüche, wobei der Datenaustausch von und zu dem modifizierten ENUM-Resolvern auf standardisierten DNS Protokollformaten basiert.

7. Das Verfahren nach einem oder mehreren der vorhergehenden Ansprüche, wobei basierend auf den hinterlegten Regeln und der vom ENUM Client empfangenen Anfrage unter Berücksichtigung der ENUM Domain und der Absenderadresse, die zeitlich parallele Abfrage mehrerer ENUM Bäume erfolgt.

8. Das Verfahren nach einem oder mehreren der vorhergehenden Ansprüche, wobei verschiedenen anfragenden ENUM Clients per Policy verschiedene ENUM Bäume zugeordnet werden.

9. Vorrichtung zur Auflösung von ENUM Anfragen, **gekennzeichnet durch** eine Einrichtung und Ausstattung, welche derart ausgestaltet ist, dass sie alle Schritte des Verfahrens nach einem oder mehreren der vorhergehenden Ansprüche durchführt.

10. Datenträger, der ein Programm aufweist, das wenn es durch einen Computer geladen und ausgeführt wird, alle Schritte des Verfahrens nach einem oder mehreren der vorhergehenden Ansprüche durchführt.

## Claims

1. A method for determining addresses in various ENUM-trees via a modified ENUM-Resolver comprising a plurality of interfaces to ENUM-Clients and a plurality of interfaces to various ENUM-Resolvers, comprising the steps:
- receiving a ENUM-Request of a ENUM-Client;
- modifying the request, such that the request can be sent to a plurality of different ENUM-Resolvers in parallel by respectively replacing the original ENUM-Domain by different ENUM-Root-Domains;
- parallel sending the ENUM-Inquiry to the plurality of different ENUM-Resolvers in;
- processing the results of the parallel ENUM-Requests;
- forwarding a result of the parallel ENUM-Requests to the ENUM-Client,
**characterized by a**
a modified ENUM-Resolver, providing a number of local ENUM-Resolvers establishing an interface to the ENUM-Clients and having a plurality of local ENUM-Clients that are communicating to the ENUM-Resolvers of the ENUM-trees, wherein a parallel resolution concept and a respective control between the local ENUM-Resolvers and the local ENUM-Clients controls, the communication between the two of them, wherein the responses of the ENUM-Inquiries received in a configurable time are combined with respect to a policy and are sent to the client as response, wherein the inquiry results of all ENUM-Requests are transmitted and, if subsets of the results are identical these elements only transmitted once.

2. The method according to one or more of the preceding claims, wherein the ENUM-Inquiries and their results is saved/cached to for a predetermined time.

3. The method according to one or more of the preceding claims, wherein arbitrary ENUM-trees to be inquired from the system are assigned to the respective potential requesting ENUM-Client.

4. The method according to one or more of the preceding claims, wherein the system according to the invention supports the naming address resolution function (NARF) to preferably provide interworking between/or in fixed NGNs, the Internet and mobile networks.

5. The method according to one or more of the preceding claims, wherein the configuration of the inquired ENUM-trees of the ENUM-Client is specifically done in the modified ENUM-Resolver.

6. The method according to one or more of the preceding claims, wherein the data transfer of and to the modified ENUM-Resolver is based on standardized DNS protocol formats.

7. The method according to one or more of the preceding claims, wherein the temporally parallel inquiry of multiple ENUM-trees is done based on the provided rules and the Inquiry received from the ENUM-Client and under consideration of the ENUM-Domain and the senders address.

8. The method according to one or more of the preceding claims, wherein various ENUM-trees are assigned to various requesting ENUM-Clients per policy.

9. A device for resolving ENUM-requests **characterized by** an configuration and implementation which is embellished such that it executes all steps of the method according to one or more of the preceding claims.

10. A storage device comprising a program that is loaded and executed by a computer and executes all steps of the method according to one or more of the preceding claims.

## Revendications

1. Une méthode de détermination d'adresses dans divers arbres ENUM via un agent de résolution ENUM modifié comprenant une pluralité d'interfaces pour des clients-ENUM et une pluralité d'interfaces pour divers agents de résolution ENUM, comprenant les étapes :
- réception d'une requête ENUM d'un client ENUM ;
- modification de la requête, de telle sorte que la requête puisse être parallèlement transmisse à une pluralité d'agents de résolution ENUM distincts en remplaçant respectivement le domaine ENUM original par différent domaines racines ENUM ;
- la transmission en parallèle de la requête EUM à la pluralité d'agents de résolution ENUM distincts ;
- le traitement des résultats des requêtes ENUM parallèles;
- la transmission d'un résultat des requêtes ENUM parallèles au client ENUM,
**caractérisée par**
un agent de résolution ENUM modifié, fournissant un nombre d'agents de résolution ENUM locaux établissant une interface pour les clients ENUM et ayant une pluralité de clients ENUM locaux qui communiquent avec les agents de résolution ENUM des arbres ENUM, dans lequel un concept de résolution parallèle et une commande respective entre les agents de résolutions ENUM locaux et les commandes de clients ENUM locaux, la communication entre deux d'entre eux, dans laquelle les réponses des requêtes ENUM reçues dans un délai configuré sont combinées conformément à une politique et transmise en tant que réponse au client, dans laquelle les résultats des requêtes de toutes les requêtes ENUM sont transmises et, si des sous-ensembles de résultats sont identiques, ces éléments ne sont transmis qu'une seule fois.

2. La méthode selon une ou plusieurs revendications précédentes, dans laquelle les requêtes ENUM et leurs résultats sont sauvegardées ou mises en cache pendant une durée prédéterminée.

3. La méthode selon une ou plusieurs des revendications précédentes, dans laquelle des arbres ENUM arbitraires devant être investigués depuis le système sont assignés aux clients ENUM en requête potentielle respectifs.

4. La méthode selon une ou plusieurs des revendications précédentes, dans laquelle le système selon l'invention supporte la fonction de résolution d'adresse de nom (NARF) pour fournir de préférence une interopérabilité entre/ou des NGNs fixes, le réseau Internet et les réseaux mobiles.

5. La méthode selon une ou plusieurs des revendications précédentes, dans laquelle la configuration des arbres ENUM investigués du client ENUM est spécifiquement effectuée dans l'agent de résolution ENUM modifié.

6. La méthode selon une ou plusieurs des revendications précédentes, dans laquelle le taux de transfert de données depuis et vers l'agent de résolution ENUM modifié est basé sur les formats de protocole DNS standardisés.

7. La méthode selon une ou plusieurs des revendications précédentes, dans laquelle la requête parallèle temporaire des multiples arbres ENUM est effectuée sur la base de règles fournies et de la requête reçue par le client ENUM et en considération du domaine ENUM et de l'adresse des transmetteurs.

8. La méthode selon une ou plusieurs des revendications précédentes, dans laquelle on assigne pour chaque politique divers arbres ENUM à divers client ENUM en requête.

9. Un dispositif de résolution de requêtes ENUM **caractérisé par** une configuration et une implémentation réalisée de telle manière à mettre en oeuvre toutes les étapes de la méthode selon l'une quelconque des revendications précédentes.

10. Un dispositif de stockage comportant un programme chargé et exécuté par un ordinateur et exécutant toutes les étapes de la méthode selon l'une quelconque des revendications précédentes.
